# EUROPÄISCHE PATENTSCHRIFT

(11) **EP 0 545 961 B1**
(45) Veröffentlichungstag und Bekanntmachung des Hinweises auf die Patenterteilung: **08.06.1994**
(21) Anmeldenummer: 91914476.6
(22) Anmeldetag: 14.08.1991
(51) Int. Cl.: G05B 19/42, A01L 11/00

(54) **VERFAHREN ZUR HERSTELLUNG EINES HUFBESCHLAGES**
PROCESS FOR MANUFACTURING A HORSESHOE
PROCEDE DE FABRICATION DE FERS A CHEVAL

(30) Priorität: 27.08.1990 DE 4027057
(43) Veröffentlichungstag der Anmeldung: 16.06.1993
(73) Patentinhaber: BAUR, Andreas, D-81476 München (DE)
(72) Erfinder: BAUR, Andreas, D-8000 München 71 (DE); BAUR, Fritz, D-8000 München 71 (DE)
(74) Vertreter: Heim, Hans-Karl, Dipl.-Ing.
(86) Internationale Anmeldenummer: EP9101550
(87) Internationale Veröffentlichungsnummer: WO9203770

(56) Entgegenhaltungen:
- EP-A- 0 273 826
- WO-A-88/00793
- WO-A-88/08666
- FR-A- 2 549 676
- GB-A- 2 067 326
- GB-A- 2 221 060
- US-A- 4 862 377
- STEUERUNGSTECHNIK Bd.3,Nr.4,1.April 1970,MAINZ (DE) Seiten 114-119; WALCHER UND SÜSS:" DIGITALISIERUNG GRAFISCHER VORLAGEN DURCH AUTOMATISCHE KURVENABTASTUNG"
- MACHINE DESIGN Bd.59,Nr.26, 1.November 1987,CLEVELAND (US) Seite 84; "TABLETOP MACHINE TOOL VERIFIES CAD DATA"

## Beschreibung

Die Erfindung betrifft ein Verfahren zur Herstellung eines Hufbeschlags.

Es sind sowohl Fabrikhufbeschläge als auch von Hand geschmiedete Hufeisen allgemein bekannt. Fabrikhufbeschläge sind grundsätzlich weder besser noch haltbarer als die besten handgeschmiedeten Eisen, haben aber den Vorteil, daß ein bewährtes Modell nachgebildet werden kann. Sie haben eine gleichmäßige Form, eine ebene Tragfläche und ersparen dem Schmied wertvolle Zeit durch die Reduzierung manueller Arbeit.

Aus dem Fachbuch von J. Hickmann "Der richtige Hufbeschlag", BLV-Verlagsgesellschaft, ist es bekannt, Fabrikhufeisen herzustellen, indem entweder ein Stück Eisenstab oder Flachstahlstab um einen Block gezogen wird, oder indem sie in einem Prägestock gestempelt werden. Ein Nachteil der auf diese Weise hergestellten Fabrikhufeisen besteht darin, daß die Nagellöcher an jedem Eisen in gleicher Weise und Größe senkrecht eingestanzt werden. Senkrechte Nagellöcher lassen jedoch dem Schmied wenig Spielraum beim Eintreiben der Nägel. Aus diesem Grunde ist es erforderlich, bei derartigen Hufeisen von Hand nachzulochen, was natürlich Nachteile mit sich bringt. Da alle Nagellöcher gleich weit vom Hufeisenrand entfernt sind, fallen die Vorteile der feinen und groben Nagelung weg, mit der man die spezifischen Probleme bestimmter Pferde lösen kann.

Da Hufeisen als Massenartikel gelten, die preiswert sein müssen, können nur bestimmte Standardgrößen und -formen von Hufeisen hergestellt werden.

Es besteht die Tendenz, daß Hufeisen so leicht wie möglich sein sollen. Sie müssen den Huf schützen und ihm einen guten Halt verschaffen, außerdem müssen sie stark genug sein, um sich nicht zu verdrehen, zu verbiegen oder zu zerbrechen. Insbesondere für Rennpferde besteht die Notwendigkeit, außerordentlich leichte Hufeisen zu verwenden.

Bei Fabrikhufbeschlägen, die aus Aluminium gefertigt werden, besteht das Problem, daß sie nicht ohne weiteres verformt werden können, wie dies bei Hufbeschlägen aus Schmiedeeisen möglich ist. Der Hufschmied muß daher bei fabrikmäßig vorgefertigten Hufbeschlägen aus den zur Verfügung stehenden Standardgrößen und -formen einen Hufbeschlag auswählen, welcher der Form und Größe des Hufs, der zu beschlagen ist, möglichst nahekommt. Es wird sich jedoch bei dieser Auswahl nur eine relativ geringe Paßgenauigkeit erreichen lassen. Außerdem läßt sich dabei nur in unzureichender Weise berücksichtigen, um welche Art von Pferd es sich handelt, wie groß es ist, wieviel es wiegt und welche Art von Arbeit es verrichtet. Auch Gebäude sowie Gangart des Pferdes können nicht hinreichend berücksichtigt werden. Die unterschiedlichen Anforderungen für Rennpferde, Jagdpferde, Polopferde, Wagenpferde und Reitpferde lassen sich kaum erfüllen. Noch viel weniger ist die Korrektur fehlerhafter Hufe durch den Hufbeschlag möglich. Als fehlerhaft gelten insbesondere solche Hufe, die aufgrund der Hufstellung oder der Beinhaltung des Pferdes verformt oder anormal sind. Es kann auch durch vielfältige sonstige Einflüsse zu fehlerhaften Hufen kommen, welche durch die Verwendung von Fabrikhufbeschläge nur unzulänglich versorgt werden können.

Auf dem Schuhwerk-Sektor ist aus der US-PS 4 862 377 ein Verfahren bekannt, das aufgrund gespeicherter Formen zunächst die Lage eines Lederzuschnittes als Halbfabrikat identifizieren kann. Entsprechend dieser Identifizierung wird das Halbfabrikat dann einer Druck- bzw. Aufzeichnungseinrichtung, die computergesteuert ist, zugeführt und in dieser dann auf dem Halbfabrikat eine Markierung zum Vernähen des Leders mit dem Untermaterial aufgebracht.

Eine Fortbildung des vorgenannten bekannten Verfahrens ist in der GB-A 2 067 326 beschrieben, wobei dort die Schnittform für das Leder-Halbmaterial über entsprechende Parameter berechnet werden kann.
Beide vorgenannten Verfahren haben jedoch keinerlei Bezug auf einen Hufbeschlag. Bekannte Verfahren sind daher auf vorgegebene und einstellbare Größen konzipiert und betreffen auch nicht eine individuelle Anpassung des Halbfabrikates. Es handelt sich daher nicht um eine Einzelfertigung, die eine optimale Anpassung an den Träger zuläßt.

Im Gegensatz zu den beiden vorausgenannten Verfahren betrifft die WO-88/08 666 einen Hufbeschlag, der als Endprodukt an verschiedenen Stellen unterschiedlich hart ausgelegt sein soll. Man geht hier den Weg, mittels eines Lasers die bestimmten Bereiche zu erweichen und mit Partikeln wie Titan, Chrom oder Nickel zu versetzen. Dieses bekannte Verfahren bringt jedoch keinerlei individuelle Anpassung an Hufabmessungen.

Weiterhin betrifft auch die WO-88/00 793 einen Hufbeschlag. Der hier beschriebene, aus einer Platte bestehende Kunststoffhuf, zielt jedoch darauf ab, den Außen- und Innenbereich mittels einer dünnen Platte zu verbinden, die eine Durchblutungsförderung im Hufbereich bewirken soll.

Ausgehend von den vorausgehend angeführten Kenntnissen bei Hufbeschlägen liegt der Erfindung die **Aufgabe** zugrunde, ein Verfahren zur Herstellung eines Hufbeschlags zu schaffen, mit welchem aus einem besonders leichten Material auf wirtschaftliche Weise ein Hufbeschlag gefertigt werden kann, welcher auf einen beliebigen Huf selbst dann optimal paßt, wenn der Huf Anomalien aufweist.

Zur Lösung dieser Aufgabe sieht die Erfindung vor, daß an jedem Huf, der zu beschlagen ist, die für eine individuell angepaßte Form eines Hufbeschlags wesentlichen Hufmaße abgegriffen werden, daß aus den wesentlichen Hufmaßen unter Berücksichtigung gegebenenfalls vorhandener Anomalien eine vorgebbare Form des Hufbeschlags festgelegt wird, daß aus den wesentlichen Hufmaßen eine für eine physiologisch optimale Anbringung des Hufbeschlags am Huf günstige Anzahl sowie die entsprechende Lage der Nagellöcher im Hufbeschlag festgelegt wird, daß die für die Form und die Nagellöcher des Hufbeschlags maßgeblichen Hufparameter in einen Speicher einer Steuerung für eine Fertigungsmaschine eingegeben werden, daß die abgespeicherten Hufparameter zur Führung der Bewegung eines Fertigungswerkzeuges verwendet werden, daß die gewünschte vorgegebene Form des Hufbeschlags einschließlich der Nagellöcher aus einem Stück Vollmaterial ausgearbeitet wird, daß der Hufbeschlag aus einem beliebig vorgebbaren Material gefertigt wird, welches für eine Bearbeitung geeignet ist, und daß dem Hufbeschlag durch die Verfahrensschritte seine aufschlagfertige Endform gegeben wird, so daß er ohne Nacharbeitung und ohne Anpaßverformung zum Aufschlagen auf den Huf fertig ist.

Mit dem erfindungsgemäßen Verfahren wird der wesentliche technische Fortschritt erreicht, daß auch dann eine außerordentlich gute Paßgenauigkeit erreicht wird, wenn einerseits ein Material wie hochfestes Aluminium verwendet wird, welches sich praktisch kaum verformen läßt und wenn andererseits ein fehlerhafter Huf zu beschlagen ist, der starke Anomalien aufweist. Mit der Erfindung wird nämlich die Möglichkeit eröffnet, in rationeller Fertigung und damit besonders wirtschaftlich für jeden Huf einen individuell angepaßten Hufbeschlag zu fertigen.

Gemäß der Erfindung besteht eine völlig freie Materialwahl, da es nicht erforderlich ist, einen fertiggestellten Hufbeschlag nachträglich noch zu verformen, um es einem bestimmten Huf anzupassen. Gemäß der Erfindung ist es vielmehr möglich, beispielsweise aus einem hochfesten Leichtmetall, welches praktisch nicht verformt werden kann, für jeden beliebigen Huf einen individuell angepaßten Hufbeschlag herzustellen.

Bei der Verwendung von leichten Materialien ergibt sich eine erhebliche Gewichtsersparnis, die sich günstig auf die Arbeit eines Pferdes auswirkt.

Es können allgemein nicht schmiedbare Materialien bei dem erfindungsgemäßen Verfahren verwendet werden.

Eine bevorzugte Ausführungsform des erfindungsgemäßen Verfahrens sieht vor, daß die wesentlichen Hufparameter dadurch abgegriffen werden, daß der Umriß des Hufs als Umriß-Kurve aufgezeichnet wird und daß zur Führung des Fertigungswerkzeugs die Umriß-Kurve ausgewertet wird. Auf diese Weise ist der Umriß eines Hufes relativ einfach zu erfassen und zugleich sehr genau zu berücksichtigen. Beispielsweise kann gemäß der Erfindung mit einem Zeichenstift am Rand des Hufes entlang gefahren werden, um auf diese Weise den Umriß des Hufes auf eine Zeichenunterlage aufzuzeichnen. Es kann dann weiterhin die optimale Lage der Nagellöcher eingezeichnet werden. Auf diese Weise läßt sich mit sehr einfachen Mitteln eine besonders große Genauigkeit erzielen.

Vorzugsweise kann dabei vorgesehen sein, daß die Umriß-Kurve elektro-optisch abgetastet und in eine hinreichende Anzahl von Kurvenpunkten aufgelöst wird, die in den Speicher eingegeben werden, aus dem entsprechende Kurvenpunkt-Koordinaten zur Führung des Fertigungswerkzeugs entnommen werden. Natürlich kann auf diese Weise nicht nur die Lage der Nagellöcher vorgegeben werden, es kann auch ihre Richtung gewählt und entsprechend hergestellt werden.

Eine vorteilhafte Weiterbildung des erfindungsgemäßen Verfahrens sieht vor, daß die für die Herstellung eines bestimmten Hufbeschlagtyps, wie glatter Stempelbeschlag, gefalzter Beschlag, Pilzbeschlag, Stegbeschlag oder dergleichen notwendigen Basisdaten vorab in den Speicher eingegeben werden, daß zur Fertigung eines gewünschten Hufbeschlags die individuellen Hufparameter ebenfalls dem Speicher zugeführt werden und daß aus dem Speicher die Basisdaten sowie die individuellen Hufbeschlagsparameter der Fertigungsmaschinen-Steuerung zur Führung des Fertigungswerkzeugs zugeführt werden. Es lassen sich natürlich gemäß der Erfindung weitere beliebige Hufbeschlägetypen vorgeben, so daß den individuellen Bedürfnissen eines Pferdes in besonders flexibler Weise Rechnung getragen werden kann. Es wird somit gemäß der Erfindung der weitere Vorteil erreicht, daß Schädigungen, Schwächen oder Mißbildungen des Hufes durch entsprechende Formgebung des Hufbeschlags ausgeglichen und weitgehend kompensiert werden können.

Wenn das erfindungsgemäße Verfahren besonders einfach durchgeführt werden soll, ist es zweckmäßig, daß außer dem Hufbeschlagtyp wenigstens die Stärke und die Breite des gewünschten Hufbeschlags in den Speicher eingegeben werden. Ohne besonderen zusätzlichen Aufwand kann auch vorgesehen sein, daß die Anzahl und die Lage der Nagellöcher in den Speicher eingegeben werden. Damit kann sichergestellt werden, daß unter Berücksichtigung der individuellen Ausbildung eines Hufes, auch bei eventuellen Beschädigungen, stets ein besonders guter Halt des Hufbeschlags am Huf zu gewährleisten ist.

Für Rennpferde kann beispielsweise das erfindungsgemäße Verfahren derart durchgeführt werden, daß der Hufbeschlag aus Leichtmetall hergestellt wird, insbesondere auch aus hochfestem Aluminium gefertigt werden kann. Durch die gemäß der Erfindung gewährleistete absolute Paßgenauigkeit wird auf diese Weise beispielsweise für ein Rennpferd ein außerordentlich vorteilhafter Beschlag ermöglicht.

Ein besonders vorteilhafte Weiterbildung des erfindungsgemäßen Verfahrens sieht vor, daß der Hufbeschlag aus einem Kunststoffmaterial hergestellt wird. Dies kann sich für verschiedene Anwendungsfälle als besonders wertvoll erweisen, beispielsweise dadurch, daß auch dann kaum Hufprellungen entstehen, wenn ein Pferd auf einem harten Untergrund, wie Straßenpflaster, laufen muß.

Eine besonders vorteilhafte Ausgestaltung des erfindungsgemäßen Verfahrens sieht weiterhin vor, daß der Hufbeschlag aus einem Verbundmaterial hergetellt wird, welches an den dem Abrieb ausgesetzten Stellen hart und in den mit dem Huf in Berührung stehenden Bereichen weich und elastisch ist. Dadurch wird ein besonders dauerhafter Hufbeschlag erreicht, welcher zugleich den Huf des Pferdes schont und seine natürliche Entwicklung so wenig wie möglich beeinträchtigt. Ein derartiger Hufbeschlag ist für ein Pferd auch besonders angenehm.

Gemäß der Erfindung ist weiterhin vorzugsweise vorgesehen, daß die gewünschte vorgegebene Form des Hufbeschlags einschließlich der Nagellöcher aus einem Stück Vollmaterial herausgefräst oder auch mit Hilfe eines Laser-Strahles oder eines Wasser-Strahles herausgearbeitet wird.

In besonders eleganter Weise können die wesentlichen Hufmaße in der Form abgegriffen werden, daß der Abgriff der Hufmaße dadurch erfolgt, daß eine Video-Kamera auf einem definierten Abstand von einem Huf in der Weise positioniert wird, daß der Huf von unten aufgenommen wird, und daß die wesentlichen Hufmaße von der Video-Kamera direkt in den Speicher eingespeist werden.

Auf diese Weise werden menschliche Fehler praktisch vollständig ausgeschaltet. Weiterhin wird der Vorteil erreicht, daß auch Fehler an einem Huf in dem von der Video-Kamera aufgezeichneten Bild automatisch erfaßt und bei der Herstellung des Hufbeschlages berücksichtigt werden können. Wenn beispielsweise ein Huf an manchen Stellen zur Befestigung eines Hufbeschlages nicht geeignet ist, können die Nagellöcher derart positioniert werden, daß trotz der erkannten Fehler eine möglichst gute Anbringung des Hufbeschlages an dem Huf gewährleistet ist.

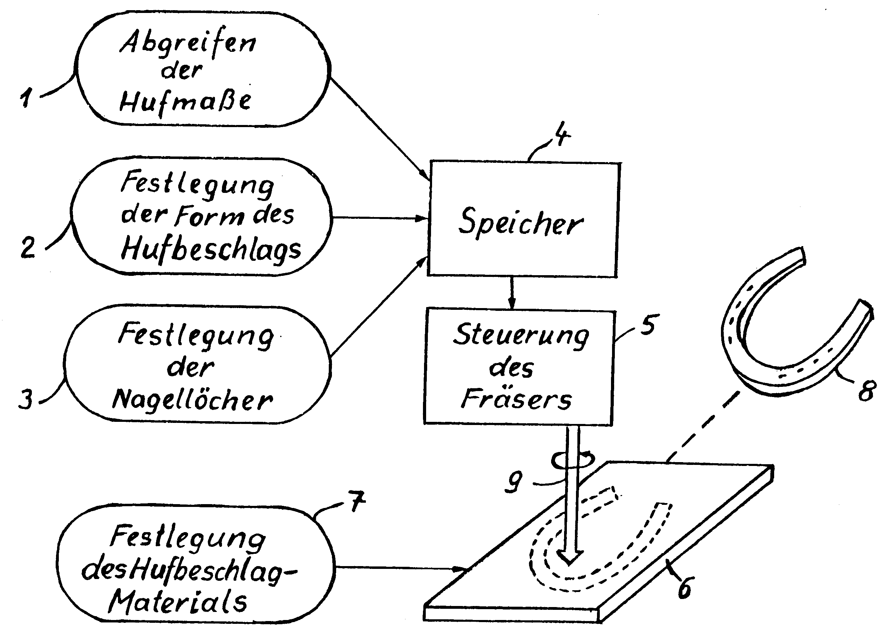

Die Erfindung wird nachfolgend beispielsweise anhand der Zeichnung beschrieben; in dieser zeigt die einzige Figur in einer schematischen Blockdarstellung den Ablauf des erfindungsgemäßen Verfahrens.

Gemäß der Darstellung in der schematischen Zeichnung wird in einem bevorzugten Ausführungsbeispiel des erfindungsgemäßen Verfahrens die Herstellung eines Hufbeschlags veranschaulicht.

Zunächst erfolgt gemäß Block 1 ein Abgriff der Hufmaße. Dies kann praktisch dadurch geschehen, daß der Huf auf eine entsprechende Unterlage gestellt wird, daß man mit einem Zeichenstift am Rand des Hufes entlangfährt und auf diese Weise die Umrisse des Hufes auf eine Zeichenunterlage aufzeichnet, und schließlich eventuell weiterhin gewünschte Formen des Hufbeschlags einzeichnet.

Dann erfolgt gemäß Block 2 die Festlegung der Form des Hufbeschlags. Es kann der gewünschte Typ eines Hufbeschlags, welcher für einen bestimmten Huf optimal erscheint, frei gewählt werden. Die zur Herstellung eines derartigen Hufbeschlagtyps erforderlichen Angaben können zuvor bereits abgespeichert worden sein.

Es erfolgt dann gemäß Block 3 die Festlegung der Nagellöcher. Dies kann beispielsweise dadurch geschehen, daß auf die zur Ermittlung des Hufumrisses verwendete Zeichenunterlage die gewünschte Position der Nagellöcher eingetragen wird. Es kann auch die Richtung der Nagellöcher vorgegeben werden, da es nicht immer zweckmäßig ist, die Nagellöcher senkrecht durch einen Hufbeschlag hindurchzuführen.

Die vom Huf abgegriffenen Hufmaße sowie die vorgegebene Form des Hufbeschlags und die Festlegung der Nagellöcher werden dann in einen Speicher 4 eingegeben. Im Speicher 4 stehen diese Daten zur Verfügung, und sie können dazu verwendet werden, einer mit 5 bezeichneten Steuerung des Fräsers zugeführt zu werden, mit dem die vorgegebene Form des Hufbeschlags aus einem Stück Vollmaterial 6 ausgefräst wird. Es kann das Vollmaterial 6 beispielsweise eine Aluminiumplatte sein, welche in manchen Fällen die Stärke des angestrebten Hufbeschlags aufweisen kann. Durch die aus dem Speicher 4 ausgelesenen Steuerdaten kann über die Steuerung 5 ein rein schematisch dargestellter Fräser 9 automatisch so gesteuert werden, daß die gewünschte Form des Hufbeschlags aus dem Vollmaterial 6 ausgefräst wird. Es entsteht auf diese Weise der mit 8 bezeichnete Hufbeschlag.

Da dieser Hufbeschlag 8 bereits allen individuellen Anforderungen gerecht wird, die von einem bestimmten Huf gestellt werden, erübrigt sich jegliche Nacharbeit. Gleichwohl besitzt der Hufbeschlag 8 eine absolute Paßgenauigkeit für den Huf, auf den er aufgeschlagen werden soll.

Gemäß Block 7 kann für die Herstellung des Hufbeschlags 8 das Material nach den Erfordernissen ausgewählt und festgelegt werden.

## Patentansprüche

1. Verfahren zur Herstellung eines Hufbeschlags,
mit folgenden Schritten,
1.1 daß an jedem Huf, der zu beschlagen ist, die für eine individuell angepaßte Form eines Hufbeschlags wesentlichen Hufmaße abgegriffen werden;
1.2 daß unter Berücksichtigung der wesentlichen Hufmaße und gegebenenfalls vorhandener Anomalien eine vorgebbare Form des Hufbeschlags (8) festgelegt wird;
1.3 daß aus den wesentlichen Hufmaßen eine für eine physiologisch optimale Anbringung des Hufbeschlags (8) am Huf günstige Anzahl sowie die entsprechende Lage der Nagellöcher im Hufbeschlag (8) zur Befestigung des Hufbeschlags (8) am Huf festgelegt wird;
1.4 daß entsprechend der Form und der Anzahl sowie Lage der Nagellöcher des Hufbeschlages die maßgeblichen Hufbeschlagsparameter berechnet und
1.5 in einen Speicher (4) einer Steuerung (5) für eine Fertigungsmaschine eingegeben werden;
1.6 daß die berechneten und abgespeicherten Hufbeschlagsparameter zur Führung der Bewegung eines Werkzeuges einer Fertigungsmaschine verwendet werden;
1.7 daß die aufgrund der berechneten Hufbeschlagsparameter an den Huf adaptierte Form des Hufbeschlags einschließlich der Nagellöcher aus einem Stück Vollmaterial (6) ausgearbeitet wird;
1.8 daß der Hufbeschlag aus einem beliebig vorgebbaren Vollmaterial (6) gefertigt wird, welches für eine Bearbeitung geeignet ist; und
1.9 daß durch die Verfahrensschritte 1.1 bis 1.8 dem Hufbeschlag (8) einschließlich optimaler Lage der Nagellöcher seine aufschlagfertige Endform gegeben wird, so daß der Hufbeschlag ohne Nacharbeitung und ohne Anpaßverformung zum Aufschlagen auf den Huf fertig ist.

2. Verfahren nach Anspruch 1,
dadurch **gekennzeichnet**,
daß die wesentlichen Hufparameter dadurch abgegriffen werden, daß der Umriß des Hufs als Umriß-Kurve aufgezeichnet wird und daß zur Führung des Fertigungswerkzeugs (5) die Umriß-Kurve ausgewertet wird.

3. Verfahren nach Anspruch 2,
dadurch **gekennzeichnet**,
daß die Umriß-Kurve elektro-optisch abgetastet und in eine hinreichende Anzahl von Kurvenpunkten aufgelöst wird, die in den Speicher (4) eingegeben werden, aus dem entsprechende Kurvenpunkt-Koordinaten zur Führung des Fertigungswerkzeugs entnommen werden.

4. Verfahren nach einem der vorhergehenden Ansprüche,
dadurch **gekennzeichnet**,
daß die für die Herstellung eines bestimmten Hufbeschlagtyps, wie glatter Stempelbeschlag, gefalzter Beschlag, Pilzbeschlag, Stegbeschlag oder dergleichen notwendigen Basisdaten vorab in den Speicher (4) eingegeben werden, daß zur Fertigung eines gewünschten Hufbeschlags (8) die individuellen Hufparameter ebenfalls dem Speicher (4) zugeführt werden und daß aus dem Speicher (4) die Basisdaten sowie die individuellen Hufbeschlag-Parameter der Fertigungsmaschinen-Steuerung zur Führung des Fertigungswerkzeugs zugeführt werden.

5. Verfahren nach einem der vorhergehenden Ansprüche,
dadurch **gekennzeichnet**,
daß außer dem Hufbeschlagtyp wenigstens die Stärke und die Breite des gewünschten Hufbeschlags in den Speicher (4) eingegeben werden.

6. Verfahren nach einem der vorhergehenden Ansprüche,
dadurch **gekennzeichnet**,
daß die Anzahl und die Lage der Nagellöcher in den Speicher (4) eingegeben werden.

7. Verfahren nach einem der vorhergehenden Ansprüche,
dadurch **gekennzeichnet**,
daß der Hufbeschlag (8) aus Leichtmetall hergestellt wird.

8. Verfahren nach Anspruch 7,
dadurch **gekennzeichnet**,
daß der Hufbeschlag (8) aus hochfestem Aluminium hergestellt wird.

9. Verfahren nach einem der Ansprüche 1 bis 6,
dadurch **gekennzeichnet**,
daß der Hufbeschlag (8) aus einem Kunststoffmaterial hergestellt wird.

10. Verfahren nach einem der Ansprüche 1 bis 6,
dadurch **gekennzeichnet**,
daß der Hufbeschlag (8) aus einem Verbundmaterial (6) hergestellt wird, welches an den dem Abrieb ausgesetzten Stellen hart und in den mit dem Huf in Berührung stehenden Bereichen weich und elastisch ist.

11. Verfahren nach einem der vorhergehenden Ansprüche,
dadurch **gekennzeichnet**,
daß die gewünschte vorgegebene Form des Hufbeschlags (8) einschließlich der Nagellöcher aus einem Stück Vollmaterial (6) herausgefräst wird.

12. Verfahren nach einem der Ansprüche 1 bis 10,
dadurch **gekennzeichnet**,
daß die gewünschte vorgegebene Form des Hufbeschlags (8) einschließlich der Nagellöcher aus einem Stück Vollmaterial (6) mit Hilfe eines Laser-Strahles herausgearbeitet wird.

13. Verfahren nach einem der Ansprüche 1 bis 10,
dadurch **gekennzeichnet**,
daß die gewünschte vorgegebene Form des Hufbeschlags (8) einschließlich der Nagellöcher aus einem Stück Vollmaterial (6) mit Hilfe eines Wasser-Strahles herausgearbeitet wird.

14. Verfahren nach einem der vorhergehenden Ansprüche,
dadurch **gekennzeichnet**,
daß der Abgriff der Hufmaße dadurch erfolgt, daß eine Video-Kamera auf einem definierten Abstand von einem Huf in der Weise positioniert wird, daß der Huf von unten aufgenommen wird, und daß die wesentlichen Hufmaße von der Video-Kamera direkt in den Speicher (4) eingespeist werden.

## Revendications

1. Procédé de fabrication d'un fer à cheval, comportant les étapes suivantes:
1.1 on prend, de chaque sabot à ferrer, les mesures essentielles à la réalisation du fer individuel adapté à ce sabot,
1.2 à partir des mesures du sabot, et compte tenu éventuellement d'anomalies existantes, on détermine une forme prévisionnelle de la ferrure (8),
1.3 à partir des mesures du sabot, on détermine un nombre avantageux de clous et la position des trous de clous correspondants à pratiquer dans la ferrure (8) pour la fixer sur le sabot dans une position physiologiquement optimales,
1.4 les paramètres dimensionnels de la ferrure sont calculés en fonction de la forme ainsi que du nombre et de la position des trous pour les clous de la ferrure,
1.5 ces paramètres sont fournis à la mémoire (4) associée à la commande (5) d'une machine d'usinage,
1.6 les paramètres de la ferrure calculés et extraits de la mémoire sont utilisés pour le déplacement d'un outil d'une machine d'usinage,
1.7 sur la base des paramètres de la ferrure calculés, la machine réalise la forme adaptée à la ferrure, trous des clous compris, à partir d'un matériau massif (6),
1.8 le matériau massif (6) a été sélectionné pour son aptitude à réaliser la ferrure par usinage,
1.9 les étapes précédentes 1.1 à 1.8 permettent d'obtenir la ferrure (8) avec la position optimale de ses trous pour les clous et dans sa forme définitive, sans opération ultérieure de reprise ou d'ajustage.

2. Procédé selon la revendication 1, **caractérisé** en ce que la prise de mesures essentielles concernant le sabot est effectuée de manière à permettre un traçage du contour externe du sabot et l'exploitation de celui-ci pour la conduite de la machine d'usinage (5).

3. Procédé selon la revendication 2, **caractérisé** en ce que le contour externe du sabot est relevé par voie électro-optique, sous la forme d'un nombre suffisant de points de contour qui sont introduits dans la mémoire (4) à partir de laquelle ils seront utilisés pour la conduite de l'outil d'usinage.

4. Procédé selon une des revendications précédentes, **caractérisé** en ce que pour fabriquer une ferrure d'un type donné, par example un fer lisse d'empreinte, un fer à rainures, un fer champignon, un fer à nervures, etc, les données de base nécessaires sont enregistrées d'avance dans la mémoire (4), puis les paramètres individuels correspondant à la fabrication d'une ferrure (8) donnée sont aussi introduites dans la mémoire (4), qui fournit ensuite au système de commande de la machine les données de base et les paramètres individuels de la ferrure servant à la commande de l'outil d'usinage.

5. Procédé selon une des revendications précédentes, **caractérisé** en ce que la mémoire (4) reçoit, en plus du type de ferrure, au moins les valeurs de l'épaisseur et de la largeur de la ferrure désirée.

6. Procédé selon une des revendications précédentes, **caractérisé** en ce que le nombre et la position des trous pour les clous sont introduits dans la mémoire (4).

7. Procédé selon une des revendications précédentes, **caractérisé** en ce que la ferrure (8) est fabriqué en métal léger.

8. Procédé selon la revendication 7, **caractérisé** en ce que la ferrure (8) est réalisée en aluminium à haute résistance.

9. Procédé selon une des revendications 1 à 6, **caractérisé** en ce que la ferrure (8) est réalisée en matière plastique.

10. Procédé selon une des revendications 1 à 6, **caractérisé** en ce que la ferrure (8) est réalisée en matériau composite (6), dur au niveau des surfaces exposées à l'abrasion, mou et élastique là ou il est au contact du sabot.

11. Procédé selon une des revendications précédentes, **caractérisé** en ce que la forme prédéterminée souhaitée pour la ferrure, y compris les trous des clous, est obtenue par fraisage d'un élément massif (6).

12. Procédé selon une des revendications 1 à 10, **caractérisé** en ce que la forme prédéterminée souhaitée pour la ferrure, y compris les trous des clous, est obtenue par découpage d'un élément massif (6) au moyen d'un rayon laser.

13. Procédé selon une des revendications 1 à 10, **caractérisé** en ce que la forme prédéterminée souhaitée pour la ferrure, y compris les trous des clous, est obtenue par découpage d'un élément massif (6) au moyen d'un jet d'eau.

14. Procédé selonune des revendications précédentes, **caractérisé** en ce que la saisie des mesures du sabot est obtenue au moyen d'une caméra vidéo placée à une distance donnée du sabot, de telle façon, que la ferrure est prise par dessous et que les mesures essentielles du sabot sont fournies directement à la mémoire (4).

## Claims

1. Method for the manufacture of a horseshoe, consisting of the following steps:
1.1. for each hoof which is to be shoed are measured the dimensions essential for a individually adapted shape of a horseshoe;
1.2. whilst taking account of the essential hoof dimensions and any irregularities, a predeterminable horseshoe (8) shape is fixed;
1.3. from the essential hoof dimensions are fixed a favourable number for a physiologically optimum fitting of the horseshoe (8) to the hoof and the corresponding position of the nail holes in the horseshoe (8) for fixing the latter to the hoof;
1.4. the essential hoof parameters according to the shape and number as well as position of the nail holes of the horseshoe are calculated and
1.5. are fed into a memory (4) of a control system (5) for a manufacturing machine;
1.6. the calculated and stored hoof parameters are used for guiding the movement of a manufacturing-machine tool;
1.7. the horseshoe shape adapted to the hoof by way of the calculated horseshoe parameters, including the nail holes, is worked from a piece of solid material (6);
1.8. the horseshoe is made from a random, predeterminable solid material (6), which is suitable for working and
1.9. that the horseshoe (8) is given its final shape ready for fitting, including optimum position of the nail holes, by method steps 1.1. to 1.8., so that it is ready for fitting to the hoof without any reworking or adapting deformation being necessary.

2. Method according to claim 1,
**characterized** in that
the essential hoof parameters are measured in that the outline of the hoof is recorded as an outline curve and that the latter is evaluated for guiding the manufacturing tool (5).

3. Method according to claim 2,
**characterized** in that
the outline curve is electrooptically scanned and broken down into an adequate number of curve dots, which are fed into the memory (4), from which are taken the corresponding curve dot coordinates for guiding the manufacturing tool.

4. Method according to one of the preceding claims,
**characterized** in that
the basic data necessary for the manufacture of a specific horseshoe type, such as a smooth punched, folded, mushroom, web or similar horseshoe are previously fed into the memory (4), that for the manufacture of a desired horseshoe (8) the individual hoof parameters are also supplied to the memory (4) and that from the memory (4) the basic data and the individual horseshoe parameters are supplied to the manufacturing machine control system for guiding the manufacturing tool.

5. Method according to one of the preceding claims,
**characterized** in that
apart from the horseshoe type, at least the thickness and width of the desired horseshoe are fed into the memory (4).

6. Method according to one of the preceding claims,
**characterized** in that
the number and position of the nail holes are fed into the memory (4).

7. Method according to one of the preceding claims,
**characterized** in that
the horseshoe (8) is made from light metal.

8. Method according to claim 7,
**characterized** in that
the horseshoe (8) is made from high-strength aluminium.

9. Method according to one of the claims 1 to 6,
**characterized** in that
the horseshoe (8) is made from a plastics material.

10. Method according to one of the claims 1 to 6,
**characterized** in that
the horseshoe (8) is made from a composite material (6), which is hard at the points exposed to wear and soft and elastic in the areas coming into contact with the hoof.

11. Method according to one of the preceding claims,
**characterized** in that
the desired predetermined shape of the horseshoe (8), including the nail holes, are cut out of a piece of solid material (6).

12. Method according to one of the claims 1 to 10,
**characterized** in that
the desired predetermined shape of the horseshoe (8), including the nail holes, is worked from a piece of solid material (6) with the aid of a laser beam.

13. Method according to one of the claims 1 to 10,
**characterized** in that
the desired predetermined shape of the horseshoe (8), including the nail holes, is worked from a piece of solid material (6) with the aid of a water jet.

14. Method according to one of the preceding claims,
**characterized** in that
the measurement of the hoof dimensions takes place in that a video camera is positioned at a clearly defined distance from a hoof in such a way that the hoof is photographed from below and that the essential dimensions are fed directly by the video camera into the memory (4).
